# EUROPEAN PATENT APPLICATION

(11) **EP 3 082 035 A1**
(43) Date of publication of application: **19.10.2016**
(21) Application number: 15305583.5
(22) Date of filing: 17.04.2015
(51) Int. Cl.: G06F 9/44

(54) **METHOD AND APPARATUS FOR DYNAMICALLY AND AUTOMATICALLY ADJUSTING TASK EXECUTION DELAY**

(71) Applicant: Laboratories Thomson Ltd., 8048 Zürich (CH)
(72) Inventor: Keller, Anton Werner, 8905 Arni (CH)
(74) Representative: Lindemann, Robert

(57) **Abstract**

A method of dynamically and automatically adjusting task execution delay comprises setting a default initial task execution delay, which task execution delay is to expire before a current task is actually executed after receiving a corresponding user input instructing to execute the current task. The method further comprises verifying if the current task to be executed is related to a previously executed task and, in the affirmative case, and depending on the type of the current task, adjusting the task execution delay.

## Description

### FIELD

The present method and apparatus relate to dynamically and automatically delaying tasks related to communication between two devices depending on various parameters, for example to an adjustment of the task execution delay depending on preceding communication events and/or depending on identifiers of devices or users involved in a communication session.

### BACKGROUND

Very often a user triggers execution of a task in a computer or handheld device and immediately after the execution has begun the user regrets and wishes to undo the task. For example, a user may have written an email and presses the "send email" button and only then recognizes that he or she did not perform a spell checking or realizes that some wording may be ambiguous or inappropriate. However, once sent the only way to "undo" sending of the email is to request the delivered message to be deleted and possibly replaced by a revised version of the email. The same can happen in social networks like Facebook ® or Twitter ®, where uploading and publishing texts or images may have undesired consequences.

While some software applications try to address this situation by requesting a user to confirm an action, e.g. sending an email or deleting a file, in a separate dialog box, such dialog boxes can be disabled by a user and, once disabled, do not help. In some situations dialog boxes may be perceived annoying, e.g. when a user is engaged in an email or text message conversation going back and forth between the user and another person.

Sailfish ® OS, a mobile operating system developed by Jolla ® Ltd., provides a so-called "remorse timer" for addressing the situation described above. The remorse timer kicks in e.g. when deleting an email or a text message, and is represented by a timer bar that shrinks as the timer expires. As long as the timer is not fully expired the user can cancel the impending execution of the task through a corresponding user input.

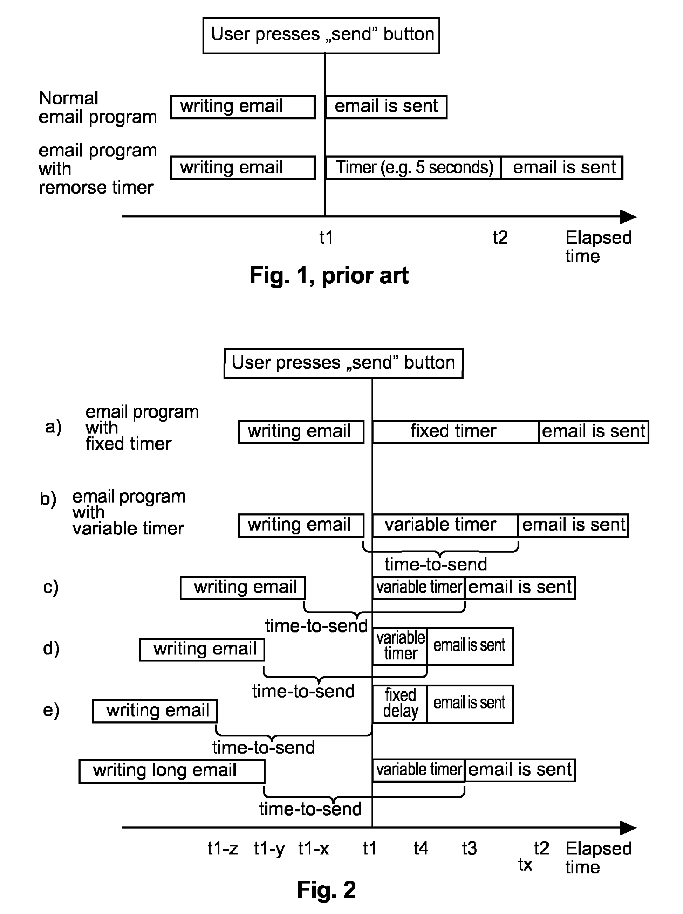

Figure 1 shows a schematic timing diagram for sending an email without remorse timer and with remorse timer. The upper timing bar shows the timing without remorse timer. Prior to time t1 a user writes an email and presses the 'send' button at time t1. The email is sent immediately. The lower timing bar shows the timing with remorse timer. Like before, prior to time t1 the user writes an email and presses the 'send' button at time t1. However, before the email is actually sent the remorse timer kicks in and delays sending of the email. In the figure the delay is exemplarily set to 5 seconds. After the expiration of the remorse timer, at time t2, the email is sent.

However, the timer is set statically, and, when repeatedly performing consecutive, i.e. non-parallelizable, tasks, may prolong the total time required for executing all tasks.

### SUMMARY

The present method and apparatus address the shortcomings of the existing solutions for the situation described further above.

A task execution delay in accordance with the present method comprises setting a default initial task execution delay. The task execution delay is to expire, after receiving a user input instructing to execute a current, or impending, task, before the task is actually executed. Further in accordance with the present method, user input instructing to execute the task is received. The present method further comprises verifying if the current task to be executed is related to a previously executed task and, in the affirmative case, and depending on the type of the current task, adjusting the task execution delay.

In the context of the present method the type of a task is defined by the effects of the task on a third party when executed. For example, sending a message, an image, a sound file or the like to a third party imparts information to the third party, and the type of the task may be named 'sending'. The type 'sending' may be further subdivided into individual types for sending messages to persons categorized as "friends", "relatives", "acquaintances", "colleagues", "superiors", and the like.

Buying goods or services online does not fit in the 'sending' type or class, because in its core it does not involve imparting information to third parties. Consequently, tasks related with these actions will belong to a different type, e.g. one named 'financial spending'. Bidding in an online auction fits into the same type or class as buying goods or services online. However, online bidding may alternatively be assigned to a proper class on its own, depending on the desired effect.

Different types, or classes, of tasks may require different adjustment of the task execution delay. For example, if a user is in an email conversation with another user, and both alternatingly send messages to and fro, typically, once the first few emails have been exchanged in an ongoing conversation, salutations at the beginning of an email as well as greetings at the end of the email will be omitted. In lively conversations, the content of emails sent later in the course of the conversation may consist of only a few words or sentences. In this case applying a fixed task execution delay, or even prolonging the delay, may be annoying to the user. Rather, the task execution delay is reduced, and eventually may even be set to zero. The user input causing the task to be executed, e.g., pressing the "send"-button, may be intercepted by a plugin for the computer program that ultimately executes the task, or may be intercepted by a software routine that is an integral part of the computer program.

When a user is in an online shopping frenzy, i.e., is shopping in an excessive manner, it may be desirable to give that user an opportunity to think about the financial effects prior to completing the online purchase. In accordance with the present method the task execution delay that is to expire after issuing the "buy online" command on an online shopping site will be increased with every further visit of an online shopping site. It may also increase with every item that is added to the shopping cart on an online shopping site. The user input causing the task to be executed, e.g., adding items to the shopping cart or confirming the online purchase, may be intercepted e.g. by a browser plugin or the like. The same variant of the present method may be used in an online auction. It is known that some users may be caught in a bidding trap, i.e. are so fixated on winning the auction that they repeatedly increase their current bidding limit and end up overbidding the auctioned article or service, i.e. end up paying a price that exceeds the actual value thereof. Increasing the time to expire before the bid is validly submitted to the online auction service with every increase of the bidding limit may help the user to reconsider his or her decision.

Thus, in accordance with an embodiment of the present method, in case the current task is related to a financial spending, the task execution delay is adjusted to be longer.

In accordance with another embodiment of the present method, in case the current task is related to sending alphanumeric content or image content, the task execution delay is adjusted to be shorter. This embodiment may comprise a variant in which online bidding is associated with a different type or class than buying goods or services online. In this case the initial default task execution delay may be set to a relatively high value, and may be decreased with every further increase of the bidding limit. In this variant of the present method the user is given the opportunity to consider whether he or she actually wants to enter the auction. In the affirmative case every further increase of the bidding limit is validly submitted to the online auction service after shorter waiting times as before.

In the context of the present method a task may be related to a previously executed task by performing the same or similar actions on the same or different data, by targeting the same or different actions towards the same recipient, addressee or receiver, and the like. For example, if a person exchanges emails with another person, and then switches to text messages or instant messager communication while still discussing the same subject, all of these communication tasks may be considered related. Likewise, if a person has tagged another person as 'friend' all communication tasks may be considered related, irrespective of the subject of individual messages. Tasks are not limited to communication between individuals, but may also relate to actions such as online shopping or online bidding. In this case the tasks may be related by the online shop that is visited, by the category of goods purchased, by an online auction number, or the like.

The default initial task execution delay may depend on the type of the task and may different for different types of tasks. It preferably is non-zero in those cases where the task execution delay is adjusted to be shorter, and may be zero in those cases where the task execution delay is adjusted to be longer. It may even be different for different types of tasks for each of which the task execution delay is reduced in accordance with the present method. For example, the default initial task execution delay may be longer for emails than for text messages or posts to social networks, because the former one may generally have content that takes longer to review. It may also be longer for emails having a longer text than for emails having shorter text. Likewise, if an email is sent to a recipient categorized as 'friend' the default initial task execution delay may be shorter than for an email to a recipient not categorized or categorized as 'office superior'. Clearly, a user wants to be sure not to send any inappropriate email to his or her superior, and a longer initial task execution delay provides for additional time for rechecking the email before it is finally sent. Sending an email to a friend may not require such a thorough checking, and thus a shorter task execution delay may be acceptable.

In accordance with an embodiment of the present method, in case the current task to be executed is related to sending alphanumeric content or image content, at least one of the initial task execution delay or an amount by which the task execution delay is adjusted depends from a recipient of textual content or image content. This embodiment allows for different initial delays and adjustments of the delay for example for emails to a superior in the office or to a close friend.

In accordance with the present method verifying if the current task to be executed is related to a previously executed task comprises determining a temporal distance between the current task and the completion of the previously executed task. Further in accordance with the present method, adjusting the task execution delay may be cancelled in case the temporal distance exceeds a predetermined first time period. The predetermined first time period may depend on the type of the current task.

In accordance with the present method a further user input related to the current task to be executed may be received prior to receiving the user input instructing to execute the current task. Such further user input may comprise at least one of alphanumeric content, image content, or content related to a buying decision or a bidding decision. Content related to a buying decision or a bidding decision comprises, inter alia, adding an article to a shopping cart, confirming a purchase, entering a bidding limit, or selecting an article and/or an amount thereof.

In accordance with an embodiment of the present method, in case the current task is related to sending alphanumeric content, the task execution delay is adjusted based on the length of the alphanumeric content.

In accordance with an embodiment of the present method, in case the current task is related to sending alphanumeric content or image content, such alphanumeric content or image content that does not entirely fit on a display is presented to a user in a scrolling manner during the expiration of the task execution delay. In a development of this embodiment, a fixed additional task execution delay is added after the textual content or the image content had completely been presented to a user. Adding the fixed delay may be activated or deactivated by the user.

In accordance with an embodiment of the present method, in case further user input relating to the current task had been received prior to receiving the user input instructing to execute the current task, and the further user input was intermediately stored, the initial task execution delay is adjusted to be shorter than the default initial task execution delay. This embodiment may be used for example in situations where a draft message had been edited, but the draft had only been stored and had not yet been sent.

In a related embodiment, user input indicating reviewing a message or an image, for example scrolling up and down, amending portions of the message, passing of a certain time period without user input and the like, that is received prior to receiving the user input instructing to execute the current task causes the task execution delay to be further shortened.

One embodiment of the present method comprises receiving a user input causing immediate execution of the current task while the task execution delay is expiring. Another embodiment of the present method comprises receiving a user input causing cancellation of the current task while the task execution delay is expiring.

The expression 'may' used hereinbefore in connection with features of the present method or embodiments thereof is to be understood as relating to individual embodiments of the present method or to embodiments comprising combinations two or more of such features. Thus, even if individual features are disclosed in this specification by referring to an embodiment, various of those features may be combined in a single embodiment, unless mutually exclusive.

### DESCRIPTION OF DRAWINGS

In the following section the invention will be described with reference to the drawings, in which
- Fig. 1: shows a schematic timing diagram for sending an email without remorse timer and with remorse timer;
- Fig. 2: exemplarily shows schematic timing diagrams of various embodiments of the present method using sending an email as an example;
- Fig. 3: shows an exemplary flow diagram of an embodiment of the present method;
- Fig. 4: shows an exemplary flow diagram of another embodiment of the present method;
- Fig. 5: shows an exemplary flow diagram of yet another embodiment of the present method; and
- Fig. 6: shows an exemplary block diagram of an apparatus adapted to execute the present method.

### DETAILED DESCRIPTION OF EMBODIMENTS

In the figures like or similar elements are referenced by the same reference numerals.

Fig. 1 has been described further above in the description of the prior art and will not be discussed again.

Fig. 2 exemplarily shows schematic timing diagrams of various embodiments of the present method using sending an email as an example. It is assumed that the email has the same length in all embodiments, except for the last one, and that a user would require the same time for re-reading the email prior to sending.

Row a) shows the timing for an email program with a fixed remorse timer that was discussed with reference to figure 1.

Row b) generally shows the timing of an email program that implements the present method, using a variable timer. The variable timer expires at time tx, the index x indicating the variable nature of the expiration time.

It is to be noted that in figure 2 the time-to-send, i.e. the time period between finishing editing the email and actually sending the email has the same duration in all embodiments, except for the last one, assuming that this corresponds to the time an average user requires to review the email. The time-to-send may also be user adjustable. The variable delay applied after the user has pressed the 'send' button is adjusted in accordance with the time-to-send parameter. However, this is not a requirement of the present method and may be considered a development of the present method. As discussed further above, the time-to-send and thus the variable delay may also be adjusted depending solely or under consideration of other parameters, e.g. how many emails had previously been sent to the same recipient within a certain time period and the like.

Row c) shows a situation in which a user has finished editing the email at time t1-x. The user does not perform any action related to the task of sending until time t1. Alternatively, the user may scroll the text for re-reading, or moving the cursor across the text in support of his re-reading. Such absence of action, or actions that may be considered related to reviewing the email are detected, and the time for the task execution delay timer is reduced accordingly. The task execution delay timer expires at time t3, which is earlier than time t2.

Row d) shows a similar situation to the one shown in row c). Here, a user has finished writing the email at time t1-y, which is earlier than t1-x. The total time-to-send between finishing writing and actually sending the email is the same as in the example of row c), and the variable timer is accordingly set to expire at time t4, which is earlier than time t3.

Row e) likewise shows a similar situation to the one shown in row c). Here, a user has finished writing the email at time t1-z, which is earlier than t1-x and t1-y. The total time-to-send between finishing writing and actually sending the email is the same as in the example of row c). However, an additional fixed time is added after the user has pressed the 'send' button that is to expire before the email is ultimately sent at time t4. The fixed delay may be added even if pressing the 'send' button occurs after a time interval that accommodates multiples of the time-to-send interval.

Row f) shows a situation in which the email is longer than in the previous examples, and thus is assumed to take longer to review. Accordingly, the time-to-send is set longer than in the previous examples. Hence, even though writing the email has finished at time t1-y, i.e. at the same time as in the example of row d), the variable timer is set to have a longer duration, and the email is ultimately sent at time t3, which is later than the sending time t4 of row d).

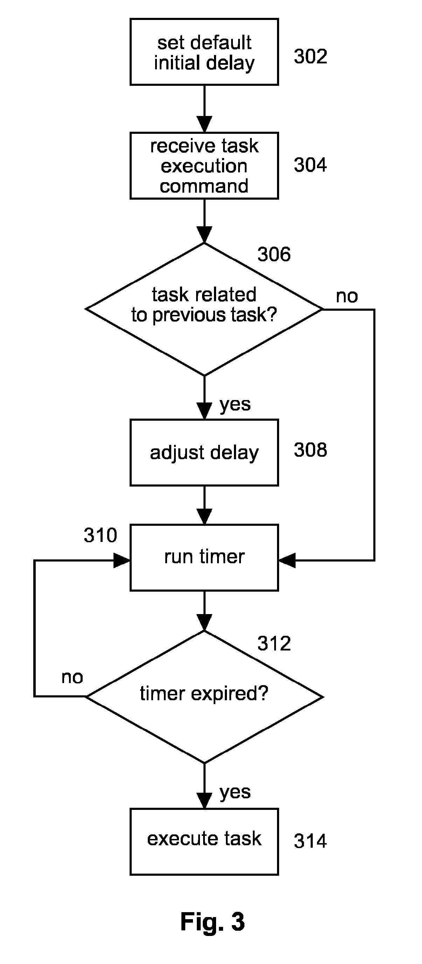

Figure 3 shows an exemplary flow diagram of an embodiment of the present method. In step 302 the default initial task execution delay is set. It is to be noted that in all embodiments and variants described throughout this specification this setting is not necessarily closely linked to receiving the task execution command. In step 304 the user input instructing to execute the task is received. In this example this may correspond to pressing the 'send' button. In step 306 the method determines if the current task is related to a previous task. In the negative case, 'no'-branch of step 306, the timer is run, step 310, using the default initial task execution delay. In the affirmative case, 'yes'-branch of step 306, the delay is adjusted, step 308, before the timer is run in step 310 using the adjusted task execution delay. In step 312 the method determines if the timer has expired. If not, 'no'-branch of step 312, the timer keeps running. If yes, 'yes'-branch of step 312, the task is executed, step 314.

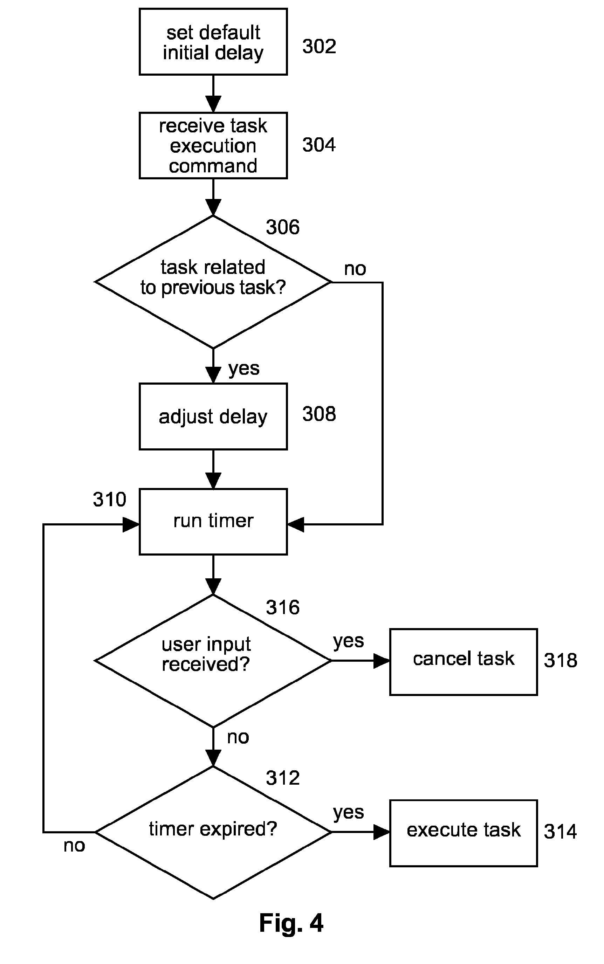

Figure 4 shows an exemplary flow diagram of another embodiment of the present method. Steps 302 to 310 correspond to steps 302 to 310 discussed with reference to figure 3 and will not be discussed in detail again. After the timer is started, and while the timer is running, the method determines if a user input for cancelling the task execution is received, step 316. If yes, 'yes'-branch of step 316, the task is cancelled, step 318. If not, 'no'-branch of step 316, the method determines if the method determines if the timer has expired, step 312. If the timer has not expired, 'no'-branch of step 312, the timer keeps running. If yes, 'yes'-branch of step 312, the task is executed, step 314.

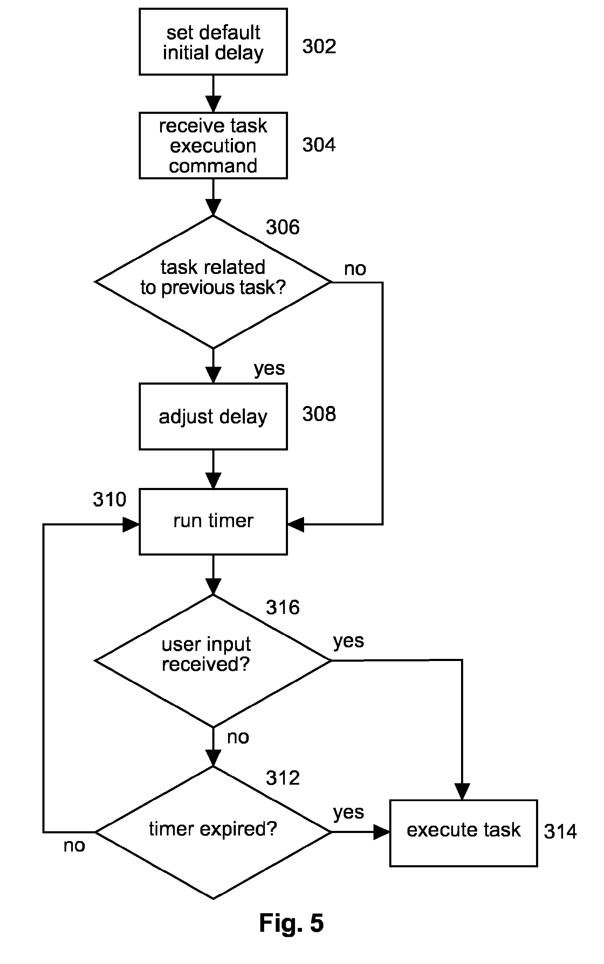

Figure 5 shows an exemplary flow diagram of yet another embodiment of the present method. Steps 302 to 316 correspond to steps 302 to 316 discussed with reference to figure 4 and will not be discussed in detail again. Unlike in the embodiment of figure 4, in figure 5 the user input received in step 316 is directed to force immediate execution of the task, irrespective of the timer's status. If such input is received, 'yes'-branch of step 316, the method directly causes the task to be executed, step 314.

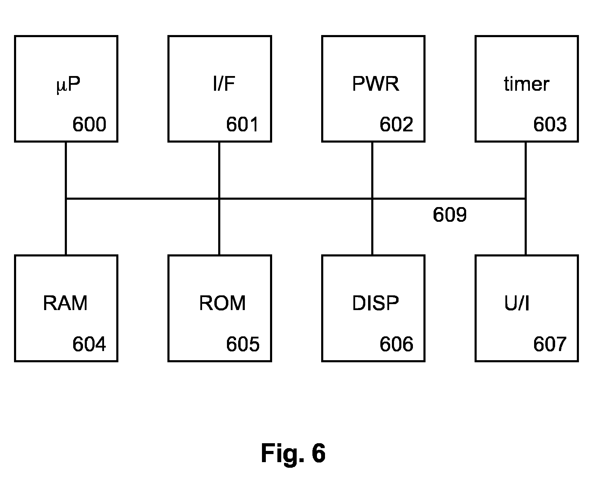

Figure 6 shows an exemplary block diagram of an apparatus that can be used in accordance with the present method. Microprocessor 600 is connected with communication interface 601, timer 603, random access memory 604, nonvolatile memory 605, display 606, user interface 607 and power supply 602 over one or more data and power bus connections 609. Non-volatile memory 605 stores program instructions which, when executed by microprocessor 600, perform one or more embodiments and/or developments of the present method described hereinbefore. It is to be noted that a timer function as required by the method described in this specification may be provided by a dedicated electronic component or by a software routine.

## Claims

1. A method of dynamically and automatically adjusting task execution delay comprises:
- setting a default initial task execution delay, which task execution delay is to expire before a current task is actually executed after receiving a corresponding user input instructing to execute the current task; and
- receiving the user input instructing to execute the current task;
wherein the method further comprises:
- verifying if the current task to be executed is related to a previously executed task and, in the affirmative case, and depending on the type of the current task, adjusting the task execution delay.

2. The method of claim1, wherein the initial task execution delay depends on the type of the task.

3. The method of claim 1, wherein a type of a task comprises one of sending an email, text message or multimedia message, posting a message or an image in a social network, bidding in an online auction, completing a purchase in an online shop.

4. The method of claim 1, wherein tasks are related by at least one of recipient/addressee of a message, subject, involving financial spending.

5. The method of claim 1, wherein verifying if the current task to be executed is related to a previously executed task comprises determining a temporal distance between the current task and the previously executed task, and wherein adjusting the task execution delay is cancelled in case the temporal distance exceeds a predetermined first time period.

6. The method of claim 5, wherein the predetermined first time period has a value that depends on the type of the current task.

7. The method of claim 1, further comprising
- receiving a further user input related to the current task to be executed prior to receiving the user input instructing to execute the current task.

8. The method of claim 7, wherein further user input related to the current task to be executed comprises at least one of alphanumeric content, image content, or content related to a buying decision or a bidding decision.

9. The method of claim 1, wherein in case the current task to be executed is related to a financial spending, the task execution delay is adjusted to be longer.

10. The method of claim 1, wherein, in case the current task to be executed is related to sending alphanumeric content or image content, at least one of the initial task execution delay or an amount by which the task execution delay is adjusted depends from a recipient of textual content or image content.

11. The method of claim 1, wherein in case the current task is related to sending alphanumeric content or image content, the task execution delay is adjusted to be shorter.

12. The method of claim 1, further including receiving, while the task execution delay is expiring, a user input causing immediate execution or cancellation of the current task.

13. The method of claim 1, wherein, in case the current task is related to sending alphanumeric content, the task execution delay is adjusted based on the length of the alphanumeric content.

14. The method of claim 1, wherein, in case the current task is related to sending alphanumeric content or image content, alphanumeric content or image content that does not entirely fit on a display is presented to a user in a scrolling manner during the expiration of the task execution delay.

15. The method of claim 14, wherein a fixed additional task execution delay is added after the textual content or the image content had completely been presented to a user.

16. The method of claim 1, wherein, in case further user input relating to the current task had previously been received, and the further user input was intermediately stored, the initial task execution delay is adjusted to be shorter than the default initial task execution delay.

17. An apparatus comprising a microprocessor (600), a random access volatile memory (604), a non-volatile memory (605), a timer (603), a user interface (607), wherein the non-volatile memory (605) stores instructions that, when executed by microprocessor (600) in cooperation with random access memory (604), cause the apparatus to execute the method of any one of the preceding claims 1 to 16.

18. The apparatus of claim 17, further including at least a communication interface (601) adapted to transmit at least one of textual content and image content or to execute at least one of an online buying and an online bidding function.
